# EUROPEAN PATENT SPECIFICATION

(11) **EP 2 533 983 B1**
(45) Date of publication and mention of the grant of the patent: **02.09.2015**
(21) Application number: 11742647.8
(22) Date of filing: 04.02.2011
(51) Int. Cl.: B60B 7/01, B60B 7/06, B60C 25/01, B60C 25/02

(54) **RIM PROTECTOR**
FELGENSCHUTZ
DISPOSITIF DE PROTECTION DE JANTE

(30) Priority: 09.02.2010 US 302931 P; 01.02.2011 US 201113019141
(43) Date of publication of application: 19.12.2012
(73) Proprietor: Motion Pro. Inc., San Carlos, CA 94070 (US)
(72) Inventor: SCOTT, Steven, Richard, Belmont CA 94002 (US)
(74) Representative: Kensett, John Hinton
(86) International application number: PCT/US2011/023805
(87) International publication number: WO 2011/100173

(56) References cited:
- EP-A2- 1 674 305
- DE-C- 728 650
- US-A- 2 252 108
- US-A- 5 423 599
- US-A1- 2003 201 666
- US-A1- 2004 244 918
- US-A1- 2004 244 918
- US-A1- 2006 137 829
- US-A1- 2007 085 412
- US-B1- 6 227 623
- US-B1- 6 672 677
- US-B1- 7 448 694
- US-B1- 7 631 681
- US-B2- 7 306 023

## Description

The following non-provisional patent application claims priority to provisional application #61/302,931 filed 2/09/2010 entitled RIM PROTECTOR to the same inventor.

### TECHNICAL FIELD

The present invention relates generally to devices for mounting and repairing inflatable tires of wheeled vehicles and more particularly to tools for removing tires from motorcycle wheels.

### BACKGROUND ART

Many two wheeled vehicles, including motorcycles and bicycles, use inflatable rubber inner tubes, which are captured between the metal rim of the wheel and a rubber tire. The rubber tire is usually made of tougher rubber compounds than the inner tubes and tire generally include tread for improved friction with the road. Although tires are made of tough materials, they are occasionally penetrated by sharp objects in the roadway, such as nails, glass slivers, etc. This can cause the inflatable inner tube to become punctured, in which case, the tube must be repaired or replaced. In order to accomplish this, the tire must first be removed from the wheel, which involves prying the bead on the outer edge of the tire from the rim. This is usually accomplished by means of a tire iron which is worked under the edge of the tire, and over a portion of the rim. It is then levered upward to push the outer edge of the tire over the edge of the rim. The tire iron is then worked around the circumference of the rim until the tire is free of the rim and the inner tube can then be extracted.

The difficulty with this operation is that the tire iron can damage the rim in the process of inserting and maneuvering the tire iron. On motorcycles, the sidewalls of the tire can be stiff and resistant to insertion of the tire iron, and efforts to force it under the rim of the tire can cause gouges and scratches to the wheel rims. Since these can be highly ornamented, or custom designed, their cost can be high, over $1,000 each in some cases. Thus, it is highly desirable that they be protected from damage, such as scratches that can occur when the tire iron is being inserted.

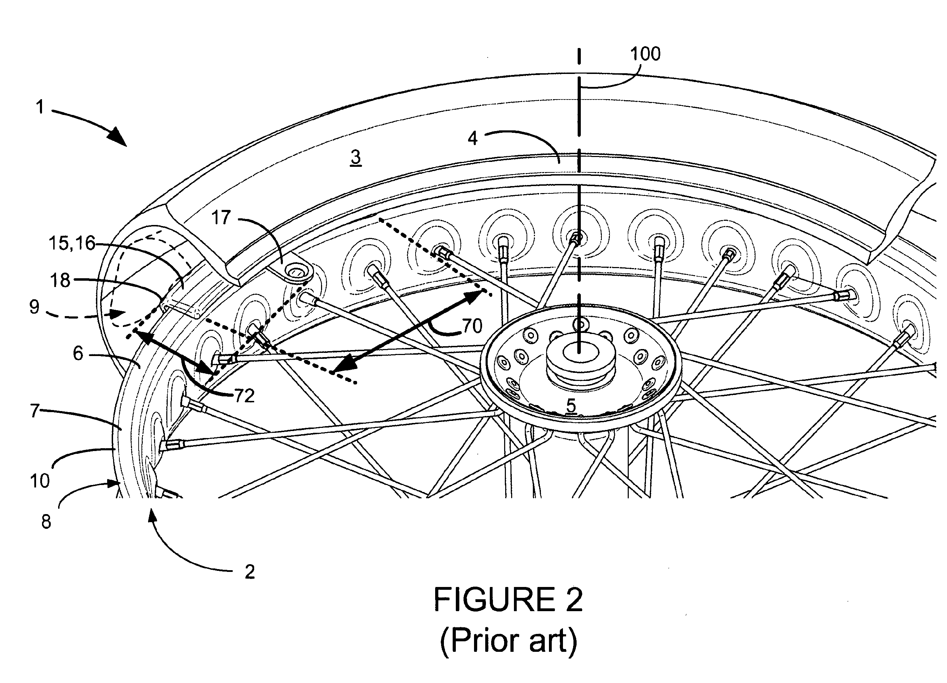

To guard against this type of damage, rim protectors have been developed which cover a portion of the rim and keep the tire iron from scratching the rim during insertion. One type of rim protector is shown in FIG. 2, where it will be discussed below.

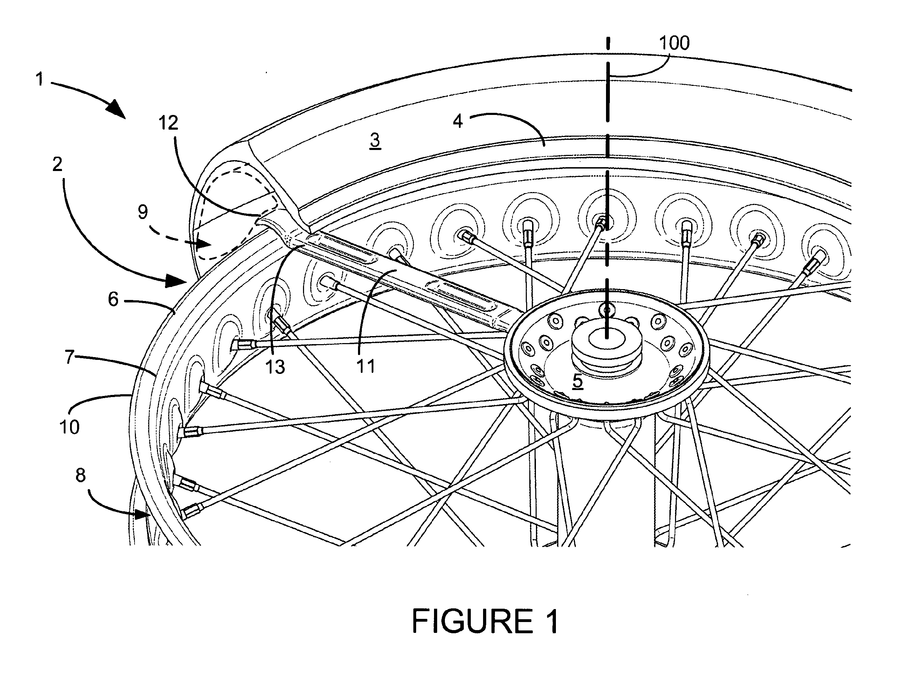

Referring to FIG. 1, the wheel assembly **1** is shown with a rim assembly **2,** and a tire **3** having a lip **4.** For simplicity and ease of viewing, the inner tube **9,** which normally resides between the rim assembly **2** and the tire **3,** has been removed, and is indicated only by dashed lines. The rim assembly **2** has a hub **5** having a central axis **100** and an outer circumference **6.** The outer circumference **6** includes the rim walls 7, which surround a rim channel **8,** in which the inner tube **9** (indicated by dashed lines) will reside. The upper portion of the rim walls **7** will be referred to as the rim lips **10.**

When removing the tire **3,** air pressure has been vented from the inner tube **9,** so the flaccid tube will not interfere with the removal of the tire **3.** A tire iron **11** having a tip **12** and a shank **13** is inserted between the rim wall **7** and the tire lip **4,** until the tip **12** clears the top of the rim lip **10.** The tire iron **11** is then levered upward, and the shank **13** carries the lip **4** of the tire **3** over the rim lip **10,** and into the rim channel **8.** This deals with a portion of the total circumference of the tire lip **4.** The procedure is then repeated at an adjoining portion of the tire **3** using the same or a similar tire iron **11,** until the total circumference of the tire lip **4** rests in the rim channel **8.** The tire **3** can then be shifted to one side of the rim channel **8,** carrying the inner tube **9** out of the rim channel **8** where it can be removed. A new or repaired inner tube **9** can then be inserted, or the tire **3** entirely removed.

If a typical rim protector **15** is to be used, as seen in FIG. 2, it is inserted between the tire lip **4** and the rim wall **8.** A rim protector **15** generally includes a main body **16** having a pull tab **17** and a hooked lip **18.** When in position, the hooked lip **18** engages the rim lip **10** along the rim's outer circumference **6.** The pull tab **17** extends towards the wheel hub **5,** from beneath the tire lip **4,** where it may be manipulated to reposition or remove the rim protector **15.**

After the typical rim protector **15** is positioned, the tip **12** of a tire iron **11** is then inserted between the main body of the rim protector **15** and the lip **4** of the tire **3** (see again FIG. 1). The tire iron **11** is then levered upwards and the tire lip **4** positioned in the rim channel **8,** as described above. The pull tab **17** is used to reposition the rim protector **15** at a neighboring location, and the tire iron **11** again inserted. Generally two rim protectors are used, which are positioned at various places around the wheel rim.

The typical rim protector can be somewhat useful in shielding the rim from scratches and gouges, but the tire iron may easily slip off the rim protector, resulting in damage to the rim, despite the use of the protector. The tire iron may also require considerable strength to force it between the tire lip and the protector. Further, the rim protector may be difficult to reposition, as the narrow pull tab is the only grasping pint for manipulating the rim protector when it is in position. Even this tab may be difficult to grasp, and users must sometimes resort to trying a string around the tab, but this may become entangled in the wheel's spokes or create other difficulties.

Thus, there is a need for a rim protector that provides greater protection for the rim, facilitates insertion of the tire iron, and is configured for easier manipulation and positioning.

US 2004/244918 A1 discloses a rim protector having a central hub and a rim having a front and rear edge.

### DISCLOSURE OF THE INVENTION

According to the invention there is provided a rim protector, for use on a wheel having a central hub and a rim, comprising: a main body, including a front edge and a rear edge, and a raised strip comprising an elevated stripe bordering a recessed portion which comprises an inclined channel which extends in a direction from said front edge to said rear edge outwardly from a central hub of a wheel, when the protector is in use, for guiding a tyre iron, wherein the rear edge has a hooked lip having a curved portion and a lip edge.

An advantage of the present invention is that it provides an inclined channel to direct a tire iron into position.

Another advantage of the present invention is that it provides improved protection for vehicle wheels from scratches and gouges.

And another advantage of the present invention is that it provides a wider radial width of protection for a vehicle wheel.

A yet further advantage of the present invention is that it includes raised stripes, which provide easier access for insertion of a tire iron beneath the lip of a tire.

Another advantage of the present invention is that is preferably configured from non-marring polymer plastic, which protects wheel from scarring.

Yet another advantage of the present invention is that it preferably includes finger holes which aid in insertion, positioning, and removal of the rim protector.

A still further advantage of the present invention is that it provides a stripe heel that acts as a fulcrum for levering action of the tire iron.

These and other advantages of the present invention will become clear to those skilled in the art in view of the description of the best presently known mode of carrying out the invention and the industrial applicability of the preferred embodiment as described herein and as illustrated in the several figures of the drawings.

### BRIEF DESCRIPTION OF THE DRAWINGS

The purposes and advantages of the present invention will be apparent from the following detailed description in conjunction with the appended drawings in which:
FIG. 1 shows an isometric view of a wheel with a tire iron;
FIG. 2 shows an isometric view of a wheel with a previous rim protector;
FIG. 3 shows a top isometric view of the rim protector of the present invention;
FIG. 4 shows a bottom isometric view of the rim protector of the present invention;
FIG. 5 shows an isometric view of a wheel with the rim protector of the present invention;
FIG. 6 shows an isometric view of a wheel with tire iron in use with the rim protector of the present invention; and
FIG. 7 shows a second top isometric view of the rim protector of the present invention.

### DETAILED DESCRIPTION OF THE PREFERRED EMBODIMENTS

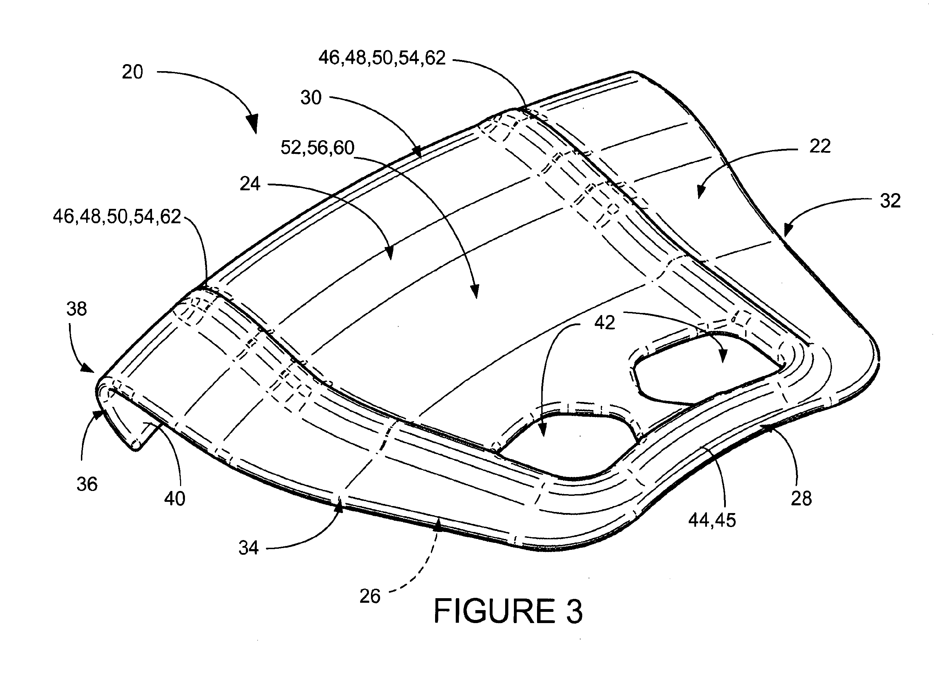

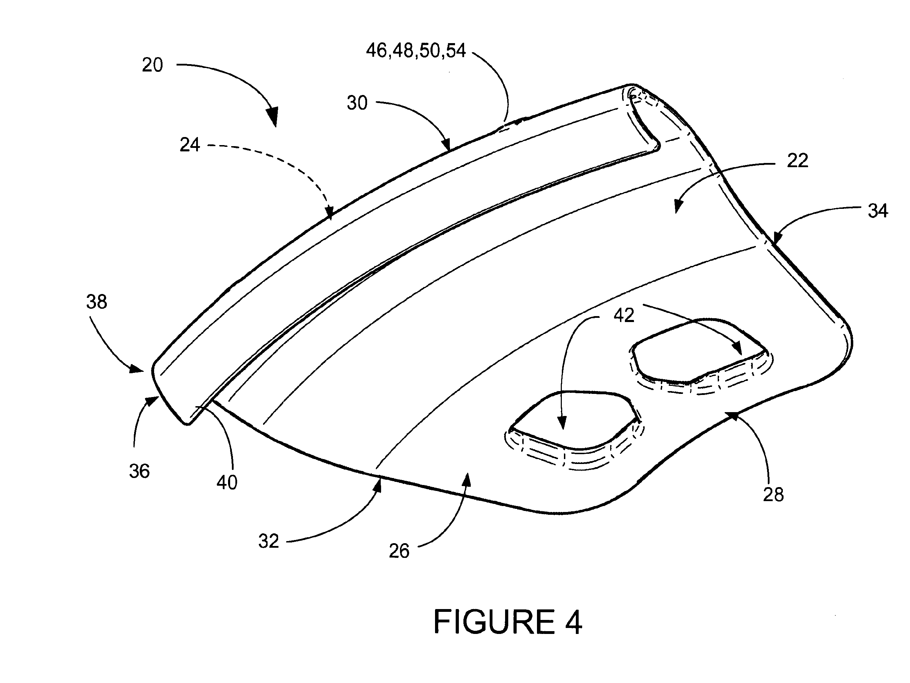

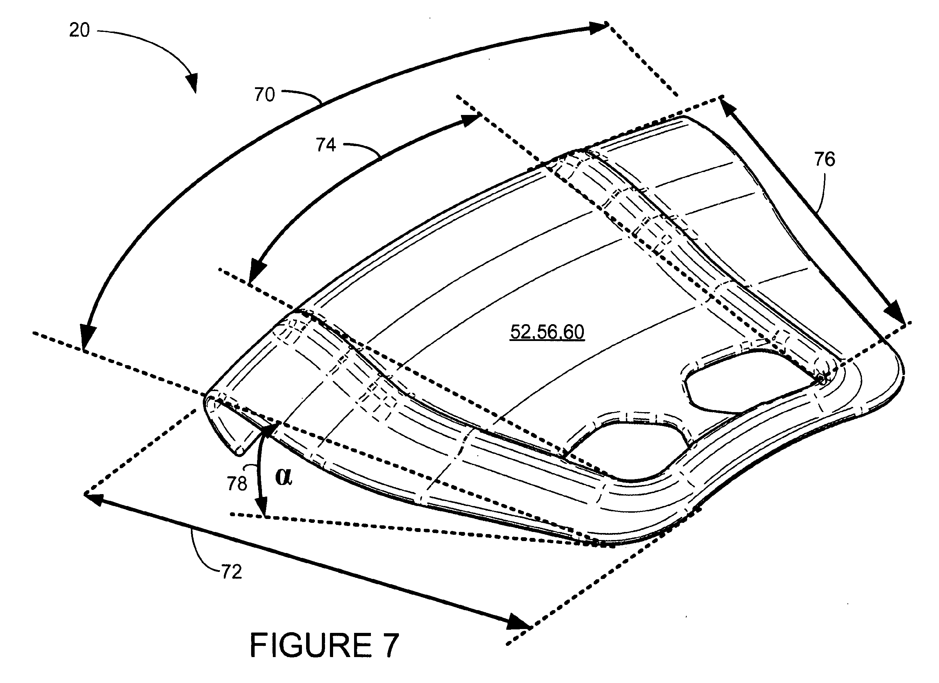

The present invention is a rim protection tool, which will be referred to by the reference number **20,** and thus shall be referred to as rim protector **20.** A preferred embodiment of the rim protector **20** is illustrated in FIGS. 3-7. For purposes of the following discussion, regarding concentric elements or surfaces, the term "inner" shall refer to an element closer to the axis of rotation of the wheel, and "outer" shall refer to those elements that are farther away from this axis.

Generally speaking, the rim protector is a device that is positioned between the rim and the lip of the tire. Its primary purpose is to prevent a tire iron from scratching or gouging the rim when the tire is being removed from the wheel for replacement of the tire or repair or replacement of an inflatable inner tube.

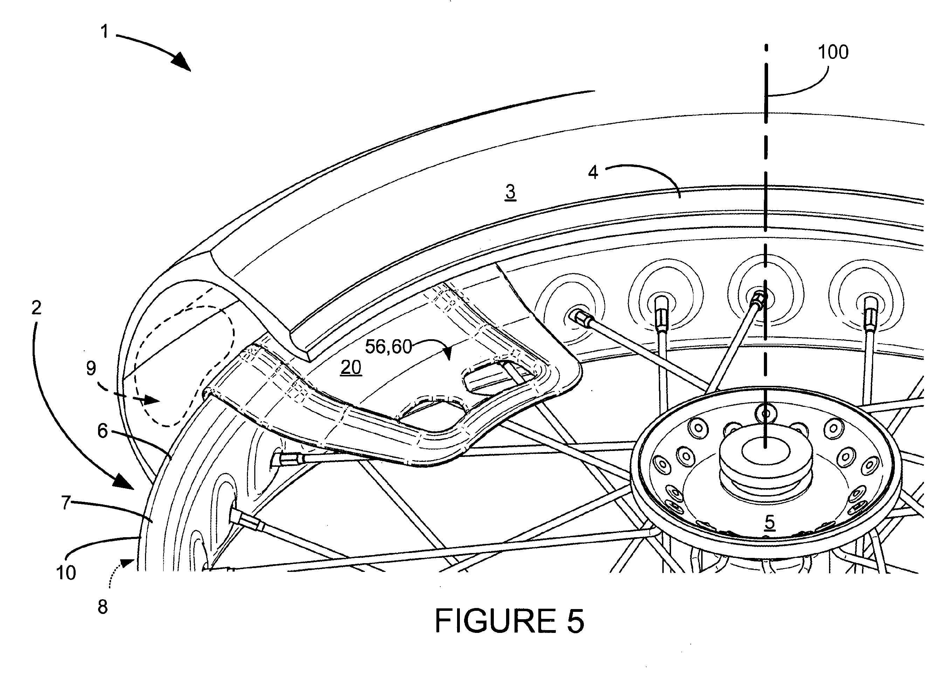

Referring now particularly to FIGS. 5-6, as discussed above, the wheel assembly **1** is shown with a rim assembly **2,** and a tire **3** having a lip **4.** For simplicity and ease of viewing, the inner tube **9,** which normally resides between the rim assembly **2** and the tire **3,** has been removed, and is indicated only by dashed lines. The rim assembly **2** has a hub **5** having a central axis **100** and an outer circumference **6.** The outer circumference **6** includes the rim walls **7,** which surround a rim channel **8** (not visible in these drawings), in which the inner tube **9** (indicated by dashed lines) will reside. The upper portion of the rim walls **7** will be referred to as the rim lips **10.**

When removing the tire **3,** air pressure has been vented from the inner tube **9,** so the flaccid tube will not interfere with the removal of the tire **3.** A tire iron **11** having a tip **12** and a shank **13** is inserted between the rim wall **7** and the tire lip **4,** until the tip **12** clears the top of the rim lip **10.** The tire iron **11** is then levered upward, and the shank **13** carries the lip **4** of the tire **3** over the rim lip **10,** and into the rim channel **8.** This prepares a portion of the total circumference of the tire lip **4.** The procedure is then repeated at an adjoining portion of the tire **3** using the same or a similar tire iron **11,** until the total circumference of the tire lip **4** rests in the rim channel **8.** The tire **3** can then be shifted to one side of the rim channel **8,** carrying the inner tube **9** out of the rim channel **8** where it can be removed. A new or repaired inner tube **9** can then be inserted, or the tire **3** entirely removed.

The difficulty with this operation is that the tire iron can damage the rim in the process of inserting and maneuvering the tire iron. On motorcycles, the sidewalls of the tire can be stiff and resistant to insertion of the tire iron, and efforts to force it under the rim of the tire can cause gouges and scratches to the rims. Since these can be highly ornamented, or custom designed, their cost can be high, over $1,000 each in some cases. Thus it is highly desirable that they be protected from damage, such as scratches that can occur when the tire iron is being inserted.

To guard against this type of damage, rim protectors have been developed which cover a portion of the rim and keep the tire iron from scratching the rim during insertion. One type of previous rim protector is shown in FIG. 2, where it has been engaged with a wheel rim. The typical rim protector was developed to shield the rim from scratches and gouges, but the tire iron may easily slip off the rim protector under pressure, resulting in damage to the rim, despite the use of the protector. The tire iron may also require considerable strength to force it between the tire lip and the protector. Further, the rim protector may be difficult to reposition, as the narrow pull tab is the only grasping point for manipulating the rim protector when it is in position. Prior rim protectors were often almost completely covered by the tire rims, with only a small tab protruding. This makes removal or relocation of the rim protector very difficult. Users often had to tie strings to the tabs in order to have any grip on them at all. Of course, loose strings can become tangled in the spokes and or otherwise become inconvenient.

The present invention has been designed to eliminate these problems. A preferred embodiment of the present invention is shown in FIGS. 3-7. The rim protector **20** has a main body **22,** a top surface **24,** a bottom surface **26,** a front edge **28,** rear edge **30,** and right side **32** and left side **34.** The rear edge **30** has been configured with a hooked lip **36** having a curved portion **38** and a lip edge **40.** The main body **22** preferably has two finger holes **42** configured to allow the user to insert fingers for easier grasping and manipulation. Although two holes are preferred, there could be one hole, or three or more holes, and the sizes and configuration are not limited to the ones illustrated. For example, there could be a single elongated hole to form a small handle, or some other configuration as will be obvious to those skilled in the art.

The area between the front edge **28** and the finger holds **42** will be referred to as handle **44,** and the material may be a thickened area **45** to provide extra strength, although this is not to be construed as a limitation.

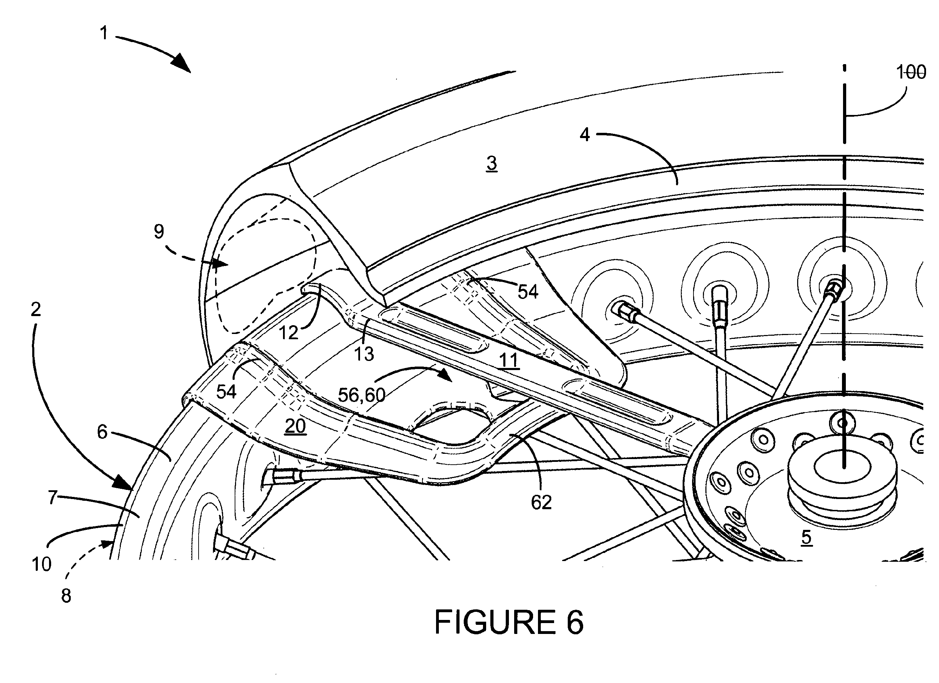

There is preferably a raised strip **46** of material, which provides an elevated stripe **48** in a roughly "u-shaped" pattern **50** on the top surface **24.** Within the u-shaped pattern **50,** there is a wide recessed area **52** of material, which may be actually recessed, or merely acts as a recessed area in relation to the elevated stripe **48.** It is within this recessed area **52** that the tire iron **11** is confined to travel. The elevated stripe **48** acts to guide the path of the tire iron **11,** and keep it from wandering off the sides and gouging the rim material, as prior rim protectors may allow. The elevated stripe **48** also presents two ridges **54** at the rear edge **30,** which hold up the tire lip at these points, presenting a narrow slot where the tip **12** of the tire iron **11** may be more easily inserted (see particularly FIG. 6).

Generally, the recessed area **52** provides a smooth approach for the tire iron **11** to be inserted under the tire lip **4.** The recessed area **52** thus provides a kind of ramp **56** or inclined channel **60,** which enables the tire iron to be smoothly guided into place to lever the tire lip **4** into the rim channel **8.** By having the tip of the tire iron **12** directed by the inclined channel, it is confined from slipping sideways under pressure, and is prevented from damaging the surface of the wheel rim walls **7,** as described above. The rim protector of course shields the surface of the rim as the levering operation of the tire iron **11** is conducted. In addition, the rear portion of the elevated stripe **48,** which will be referred to as the stripe heel **62,** provides a solid fulcrum for the levering action of the tire iron **11** as the tire rim **4** is removed.

The rim protector **20** is preferably made of material that will not scratch the wheel rim as it is being inserted. For this reason, plastic materials are preferred, such as nylon, abs plastic, or generally any non-marring polymer or other material having a lesser hardness than the surface material of the wheels, so that there is reduced chance of scratching the surfaces.

The present rim protector **20** preferably has an increased surface area compared to previous rim protectors, which protects a larger span of the wheel rim and makes insertion of the tire iron easier. For purposes of this discussion, reference will be made to dimensions of "radial width", which is the span of the wheel circumference that is covered by the rim protector, and "radial length", which is a measurement or ratio of the dimension of the rim protector as radial width 70 and radial length 72. For the present invention, the radial width is preferably found in the range of 10 cm to 25 cm (4-10 inches) for the present invention, the radial length is preferably found in the range of 10 cm to 13 cm (4-5 inches), which covers a large percentage of the radius of the wheel. Previous rim protectors were typically 2.5 to 3 cm (1 to 1.5 inches) covering a smaller percentage of the wheel radius, as seen in FIG. 2.

Within these dimensions of the present invention, the inclined channel **60** is bounded by the elevated stripe **48.** The channel **60** preferably includes a channel width **74** approximately 6 cm (2.25 inches) at its narrowest point and a channel length **76** of approximately 2.5 cm (1 inch). It is thought that an inclined channel is a feature not found in previous rim protectors.

Additionally, the inclined channel **60** of the present invention has an inclination angle **α 78,** shown in FIG. 3, which preferably lies in the range of 5 -30 degrees. This inclination angle **α 78** of course depends on the relative dimensions of the channel length and the width of the wheel rim to which the tire iron will be fitted.

Rim protectors are typically used in pairs, and are often positioned at opposing sides of the wheel circumference or "walked around" the perimeter in opposite directions, although this is not to be taken as a limitation. Also, although the discussion has focused on the use of the present invention with motorcycle tires, it should also be understood that the present invention can be used with bicycle tires, or generally with any vehicle tires that use inflatable inner tubes such that the outer tire must be removed to make replacements or repairs to the inner tube. The present invention can also be used on tubeless tires when changing the tire due to damage or wear.

While various embodiments have been described above, it should be understood that they have been presented by way of example only, and not limitation.

### INDUSTRIAL APPLICABILITY

The present rim protector **20** is well suited generally for protecting wheel rims and aiding in removing tires from wheels of vehicles.

The difficulty with repair operations where a tire is to be removed from a wheel is that the tire iron used can damage the rim in the process of inserting and maneuvering the tire iron. On motorcycles, the sidewalls of the tire can be stiff and resistant to insertion of the tire iron, and efforts to force it under the rim of the tire can cause gouges and scratches to the wheel rims. Since these can be highly ornamented, or custom designed, their cost can be high, over $1,000 each in some cases. Thus it is highly desirable that they be protected from damage, such as scratches that can occur when the tire iron is being inserted.

To guard against this type of damage, rim protectors have been developed which cover a portion of the rim and keep the tire iron from scratching the rim during insertion. The rim protector is a device that is positioned between the rim and the lip of the tire. Its primary purpose is to prevent a tire iron from scratching or gouging the rim of a wheel when the tire is being removed from the wheel for replacement of the tire or repair or replacement of an inflatable inner tube. The tire iron may require considerable strength to force it between the tire lip and the protector. Further, the rim protector may be difficult to reposition, as the narrow pull tab used on previous rim protectors is the only grasping point for manipulating the rim protector when it is in position. Prior rim protectors were often almost completely covered by the tire rims, with only a small tab protruding. This makes removal or relocation of the rim protector very difficult. Users often had to tie strings to the tabs in order to have any grip on them at all, and these strings can become tangled in the spokes and or otherwise become inconvenient.

The present invention has been designed to eliminate these problems. The rim protector **20** has a main body **22,** a top surface **24,** a bottom surface **26,** a front edge **28,** rear edge **30,** and right side **32** and left side **34.** The rear edge **30** has been configured with a hooked lip **36** having a curved portion **38** and a lip edge **40.** The main body **22** preferably has two finger holes **42** configured to allow the user to insert fingers for easier grasping and manipulation.

There is preferably a raised strip **46** of material, which provides an elevated stripe **48** in a roughly "u-shaped" pattern **50** on the top surface **24.** Within the u-shaped pattern **50,** there is a wide recessed area **52** of material, which may be actually recessed, or merely acts as a recessed area in relation to the elevated stripe **48.** It is within this recessed area **52** that the tire iron **11** is confined to travel. The elevated stripe **48** acts to guide the path of the tire iron **11,** and keep it from wandering off the sides and gouging the rim material, as prior rim protectors may allow. The elevated stripe **48** also presents two ridges **54** at the rear edge **30,** which hold up the tire lip at these points, presenting a narrow slot where the tip **12** of the tire iron **11** may be more easily inserted.

The recessed area **52** provides a smooth approach for the tire iron **11** to be inserted under the tire lip **4.** The recessed area **52** thus provides a kind of ramp **56** or inclined channel **60,** which enables the tire iron to be smoothly guided into place to lever the tire lip **4** into the rim channel **8.** By having the tip of the tire iron **12** directed by the inclined channel, it is confined from slipping sideways under pressure, and is prevented from damaging the surface of the wheel rim walls **7,** as described above. The rim protector shields the surface of the rim as the levering operation of the tire iron **11** is conducted. In addition, the rear portion of the elevated stripe **48,** which will be referred to as the stripe heel **62,** provides a solid fulcrum for the levering action of the tire iron **11** as the tire rim **4** is removed.

The rim protector **20** is preferably made of material that will not scratch the wheel rim as it is being inserted. For this reason, plastic materials are preferred, such as nylon, abs plastic, or generally any non-marring polymer or other material having a lesser hardness than the surface material of the wheels, so that there is reduced chance of scratching the surfaces. Rim protectors are typically used in pairs, and are often positioned at opposing sides of the wheel circumference or "walked around" the perimeter in opposite directions.

The present rim protector **20** preferably has an increased surface area compared to previous rim protectors, which protects a large span of the rim and makes insertion of the tire iron easier. For the present invention, the radial width is preferably found in the range of 10 cm to 25 cm (4-10 inches) for the present invention, the radial length is preferably found in the range of 10 cm to 13 cm (4-5 inches), which covers a large percentage of the radius of the wheel. Previous rim protectors were typically 2.5 cm to 3 cm (1 to 1.5 inches) covering a smaller percentage of the wheel radius.

Within these dimensions of the present invention, the inclined channel **60** is bounded by the elevated stripe **48.** The channel **60** preferably includes a channel width **74** approximately 6 cm (2.25 inches) at its narrowest point and a channel length **76** of approximately 2.5 cm (1 inch).

Additionally, the inclined channel **60** of the present invention has an inclination angle **α 78** which preferably lies in the range of 5 -30 degrees. This inclination angle **α 78** of course depends on the relative dimensions of the channel length and the width of the wheel rim to which the tire iron will be fitted.

It should be understood that the present invention can be used with motorcycle tires, bicycle tires, or generally with any vehicle tires that use inflatable inner tubes such that the outer tire must be removed to make replacements or repairs to the inner tube. The present invention can also be used on tubeless tires when changing the tire due to damage or wear. These include tubless tires found on most modem street motorcycles.

For the above, and other, reasons, it is expected that the rim protector **20** of the present invention will have widespread industrial applicability. Therefore, it is expected that the commercial utility of the present invention will be extensive and long lasting.

## Claims

1. A rim protector, for use on a wheel having a central hub and a rim, comprising:
a main body (20), including a front edge (28) and a rear edge (30), and a raised strip comprising an elevated stripe (48) bordering a recessed portion (32) which comprises an inclined channel (60) which extends in a direction from said front edge to said rear edge outwardly from a central hub of a wheel, when the protector is in use, for guiding a tyre iron, wherein the rear edge has a hooked lip (36) having a curved portion (38) and a lip edge (40).

2. The rim protector of claim 1, wherein:
said elevated stripe is configured as a U-shaped portion.

3. The rim protector of claim 1, wherein:
said main body of said rim protector has a radial width in the range of 10-25 cm (4-10 inches).

4. The rim protector of claim 1, wherein:
said main body of said rim protector has a radial length in the range of 10-12.7 cm (4-5 inches).

5. The rim protector of claim 1, wherein:
said inclined channel has a channel radial width of approximately 5.7 cm (2.25 inches).

6. The rim protector of claim 1, wherein:
said inclined channel has a channel radial length of approximately 2.5 cm (1.0 inches).

7. The rim protector of claim 1, wherein:
said inclined channel has an inclination angle in the range of 5-30 degrees.

8. The rim protector of claim 1, wherein:
said main body includes a handle portion.

9. The rim protector of claim 8, wherein:
said handle portion includes at least one finger hole (42).

10. The rim protector of claim 8, wherein:
said handle portion includes a thickened area.

11. The rim protector of claim 1, wherein:
said elevated stripe includes at least one stripe heel (62).

12. The rim protector of claim 1, wherein:
said rim protector is made from a material selected from the group consisting of nylon, ABS plastic, and no-marring polymer.

## Patentansprüche

1. Felgenschutz zur Verwendung an einem Rad mit einer mittigen Nabe und einer Felge, umfassend:
einen Hauptkörper (20), der eine vordere Kante (28) und eine hintere Kante (30) beinhaltet, und einen angehobenen Streifen, der einen erhöhten Streifen (48) umfasst, welcher an einen zurückgesetzten Abschnitt (32) grenzt, der einen geneigten Kanal (60) umfasst, der sich, wenn der Schutz verwendet wird, in einer Richtung von der Vorderkante zu der Hinterkante von einer mittleren Nabe des Rads nach außen hin erstreckt, zum Führen eines Reifenmontierhebels, wobei die Hinterkante eine hakenförmige Lippe (36) mit einem gekrümmten Abschnitt (38) und einer Lippenkante (40) hat.

2. Felgenschutz gemäß Anspruch 1, wobei:
der erhöhte Streifen als U-förmiger Abschnitt gestaltet ist.

3. Felgenschutz gemäß Anspruch 1, wobei:
der Hauptkörper des Felgenschutzes eine radiale Breite im Bereich von 10-25 cm (4-10 Zoll) hat.

4. Felgenschutz gemäß Anspruch 1, wobei:
der Hauptkörper des Felgenschutzes eine radiale Länge im Bereich von 10-12,7 cm (4-5 Zoll) hat.

5. Felgenschutz gemäß Anspruch 1, wobei:
der geneigte Kanal eine radiale Kanalbreite von ungefähr 5,7 cm (2,25 Zoll) hat.

6. Felgenschutz gemäß Anspruch 1, wobei:
der geneigte Kanal eine radiale Kanallänge von ungefähr 2,5 cm (1,0 Zoll) hat.

7. Felgenschutz gemäß Anspruch 1, wobei:
der geneigte Kanal einen Neigungswinkel im Bereich von 5-30 Grad hat.

8. Felgenschutz gemäß Anspruch 1, wobei:
der Hauptkörper einen Griffabschnitt beinhaltet.

9. Felgenschutz gemäß Anspruch 8, wobei:
wobei der Griffabschnitt mindestens ein Fingerloch (42) beinhaltet.

10. Felgenschutz gemäß Anspruch 8, wobei:
der Griffabschnitt ein verdicktes Ende beinhaltet.

11. Felgenschutz gemäß Anspruch 1, wobei:
der erhöhte Streifen mindestens einen Streifenabsatz (62) beinhaltet.

12. Felgenschutz gemäß Anspruch 1, wobei:
der Felgenschutz aus einem Material gefertigt ist, das der folgenden Gruppe angehört: Nylon, ABS-Kunststoff und kratzfestes Polymer.

## Revendications

1. Dispositif de protection de jante, destiné à être utilisé sur une roue possédant un moyeu central et une jante, comprenant :
un corps principal (20) incluant un bord avant (28) et un bord arrière (30), et une bande en saillie comportant une rayure surélevée (48) contiguë à une portion en creux (32) qui comprend un profilé incliné (60) lequel se prolonge suivant un sens allant dudit bord avant vers ledit bord arrière vers l'extérieur à partir d'un moyeu central d'une roue, lorsque le dispositif de protection est en utilisation, afin de guider un démonte-pneus, cas dans lequel le bord arrière présente une lèvre en crochet (36) avec une portion incurvée (38) et un bord de lèvre (40).

2. Dispositif de protection de jante selon la revendication 1 :
ladite rayure surélevée étant configurée en tant que portion en forme d'U.

3. Dispositif de protection de jante selon la revendication 1 :
ledit corps principal dudit dispositif de protection de jante possédant une largeur radiale dans la gamme de 10 à 25 cm (de 4 à 10 pouces).

4. Dispositif de protection de jante selon la revendication 1 :
ledit corps principal dudit dispositif de protection de jante possédant une longueur radiale dans la gamme de 10 à 12,7 cm (de 4 à 5 pouces).

5. Dispositif de protection de jante selon la revendication 1 :
ledit profilé incliné possédant une largeur radiale de profilé d'environ 5,7 cm (2,25 pouces).

6. Dispositif de protection de jante selon la revendication 1 :
ledit profilé incliné possédant une longueur radiale de profilé d'environ 2,5 cm (1,0 pouce).

7. Dispositif de protection de jante selon la revendication 1 :
ledit profilé incliné possédant un angle d'inclinaison dans la gamme de 5 à 30 degrés.

8. Dispositif de protection de jante selon la revendication 1 :
ledit corps principal incluant une portion poignée.

9. Dispositif de protection de jante selon la revendication 8 :
ladite portion poignée incluant au moins un trou pour doigt(s) (42).

10. Dispositif de protection de jante selon la revendication 8 :
ladite portion poignée incluant une zone de plus grande épaisseur.

11. Dispositif de protection de jante selon la revendication 1 :
ladite rayure surélevée incluant au moins un talon de rayure (62).

12. Dispositif de protection de jante selon la revendication 1 :
ledit dispositif de protection de jante étant fabriqué à partir d'un matériau sélectionné parmi le groupe composé de nylon, matière plastique ABS, et polymère résistant aux éraillures.
